# EUROPEAN PATENT APPLICATION

(11) **EP 1 594 077 A2**
(43) Date of publication of application: **09.11.2005**
(21) Application number: 05103782.8
(22) Date of filing: 05.05.2005
(51) Int. Cl.: G06K 9/03, B07C 3/14

(54) **Mail recognition method**

(30) Priority: 07.05.2004 IT TO20040299
(71) Applicant: ELSAG SPA, 16154 Genova (IT)
(72) Inventor: De Leo, Guido, 16134 Genova (IT); Vicenzi, Michele, 16154 Genova (IT); Franzone, Cristiano, 16154 Genova (IT)
(74) Representative: Jorio, Paolo

(57) **Abstract**

A mail recognition method including the steps of: subjecting images of mail items to at least one first recognition process (110) to generate a first set of data (DATA_{OCR}) ; and subjecting the images unsuccessfully processed by each recognition process (120) to a second recognition process (140), different from the preceding processes, to generate a second set of data (DATA_{RCR}); the process may continue with further different recognition processes. The method according to the invention includes the step of subjecting the images successfully processed by a first recognition process (120) to another recognition and/or checking process (220) so that the recognition results (OCR, RCR) of each image match or are visually checked.

## Description

The present invention relates to a mail recognition method.

Mail recognition methods are known in which images of mail items undergo a first character recognition process to generate a first set of data representing alphanumeric characters (indicating the postal code, receiver's address and data) on the mail items.

The first recognition process is normally an **OCR** process, and usually succeeds in recognizing the address on the basis of the alphanumeric characters (roughly 10% of the images fail to be recognized, and the recognition error margin of the **OCR** process is about 2-3%).

The images the first recognition process has failed to recognize (i.e. about 10%) undergo a second character recognition process, different from the first, to generate a second set of data, obviously also representing alphanumeric characters on the mail items.

The second recognition process may, for example, be an **RCR** (Reject Character Recognition) process, which usually succeeds in recognizing 40% of the preceding **OCR** process rejects.

There may also be an operator coding process.

Cascading the above three processes increases the total mail recognition percentage to as much as over 99%, while at the same time reducing the error percentage to less than 0.5%.

As is known, recognition algorithms may be variously parameterized to improve recognition probability at the expense of recognition accuracy (probability complementary to error probability per recognized volume).

In some applications, recognition and accuracy percentages may be insufficient to ensure successful follow-up mail processing, such as highly automated sorting processes.

It is an object of the present invention to provide a mail recognition process designed to ensure highly accurate recognition combined with a high mail item recognition percentage.

According to the present invention, there is provided a mail recognition method comprising the steps of: acquiring images of mail items, and subjecting said images to a first character recognition process to recognize addresses; and **characterized by** comprising the step of subjecting the images successfully processed by said first character recognition process to a second character recognition process, different from the first, to recognize an address; and checking to determine whether the results of the different character recognition processes performed on the same image match.

A preferred, non-limiting embodiment of the invention will be described by way of example with reference to the accompanying drawings, in which:
Figure 1 shows, schematically, a mail recognition system implementing the method according to the present invention;
Figure 2 shows first steps in the method according to the present invention;
Figure 3 shows second steps in the method according to the present invention;
Figure 4 shows third steps in the method according to the present invention;
Figure 5 shows a table used in the method according to the present invention.

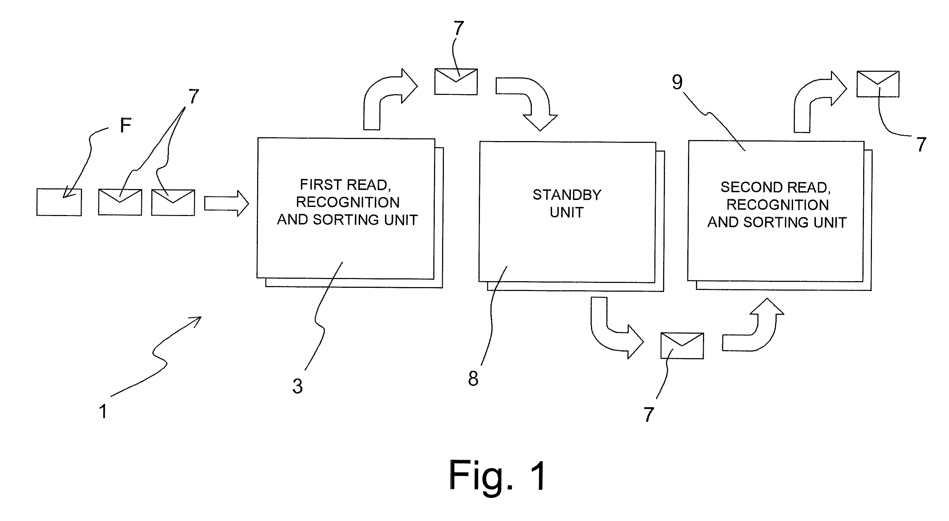

Number 1 in Figure 1 indicates as a whole a mail processing system implementing the method according to the present invention.

More specifically, system 1 comprises:
- a first read, recognition and sorting unit 3 receiving a stream F of mail items 7 (letters, postcards, enclosed documents, flats, cellophane-wrapped magazines, unwrapped magazines, catalogues, etc.);
- a standby unit 8 receiving mail items 7 from first read, recognition and sorting unit 3; and
- a second read, recognition and sorting unit 9 receiving mail items 7 from standby unit 8.

The second read, recognition and sorting unit 9 emits mail items 7 (letters, postcards, enclosed documents, flats, cellophane-wrapped magazines, unwrapped magazines, catalogues, etc.), and possibly also sends them to other units (not shown) for performing known mail processing operations, such as a mail sequencing process.

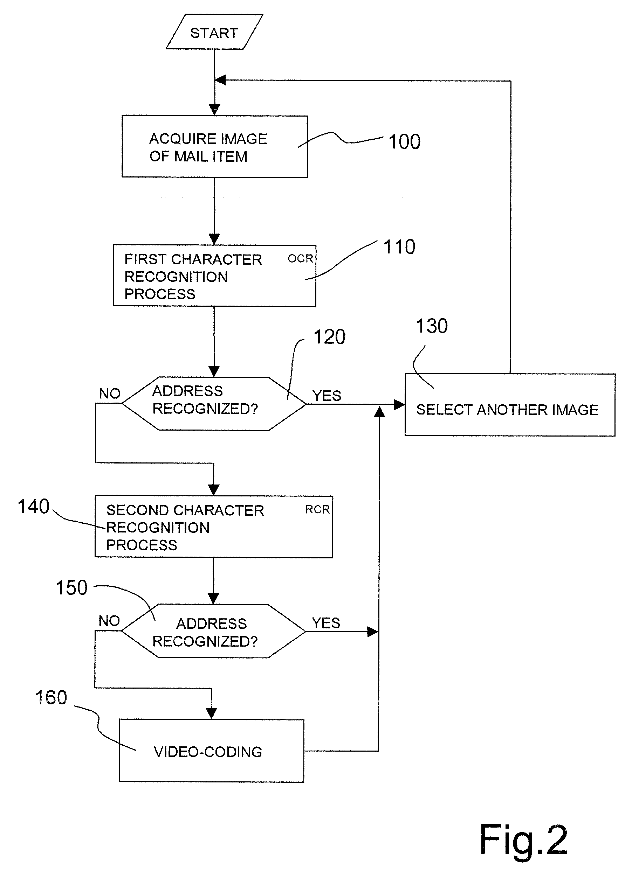

The first read, recognition and sorting unit 3 performs the operations shown in the Figure 2 flow chart.

More specifically, these comprise a first block 100 for acquiring (in known manner) an image of a mail item 7 fed to unit 3.

Block 100 is followed by a block 110, in which the acquired image is subjected to a first (known) character recognition process, typically an **OCR** (Optical Character Recognition) process, to automatically recognize the alphanumeric characters (receiver's address, postal code, receiver's identification data) in the mail item image.

Block 110 is followed by a block 120, which determines success of the process in block 110, i.e. whether the address has been recognized automatically from the mail item image. The address is recognized using known processes, which compare components of the acquired address with data in predetermined tables.

In the event of a positive response (address recognized from the alphanumeric characters and/or bar code (if any) in the image - first process successful), block 120 is followed by a block 130, which selects another image, if there is one (if there is not, the process ends), and then goes back to block 100.

If the address on the mail item is recognized, a first set of recognized data **DATA**_{**OCR**} is generated, is stored in a memory of first unit 3, and is associated with mail item 7 by an identification code, which is applied physically to the item, e.g. in the form of a bar code. Alternatively, the bar code may be present already; in which case, if it identifies the mail item unequivocally, it is read and used.

In the event of a negative response (address on the mail item not recognized, or the image not processed in block 110), block 120 is followed by a block 140, in which the current image is subjected to a known second character recognition process (different from the first), typically an **RCR** (Reject Character Recognition) process, to automatically recognize the alphanumeric characters in the mail item image.

Block 140 is followed by a block 150, which (like block 120) determines success of the process in block 140, i.e. whether an address has been recognized.

In the event of a positive response (address recognized by the second process), block 150 is followed by block 130, which selects another image and, as before, then goes back to block 100.

If the address on the mail item is recognized, a second set of recognized data **DATA**_{**RCR**} is generated, is stored in a memory of first unit 3, and is associated with mail item 7 by an identification code.

In the event of a negative response (address on the mail item not recognized, or the image not processed in block 140), block 150 is followed by a block 160, in which the current image is subjected to a known third character recognition process, involving operator intervention on a video-terminal (not shown), to recognize the address on the mail item.

A third set of recognized data **DATA**_{**V-C**} is therefore generated, is stored in a memory of first unit 3, and is associated with mail item 7 by an identification code.

Block 160 then goes on to block 130.

A mail item image is therefore definitely subjected to a first recognition process. If the first process fails, the image is subjected to a second recognition process different from the first. And, if this also fails, the image is subjected to video-coding recognition.

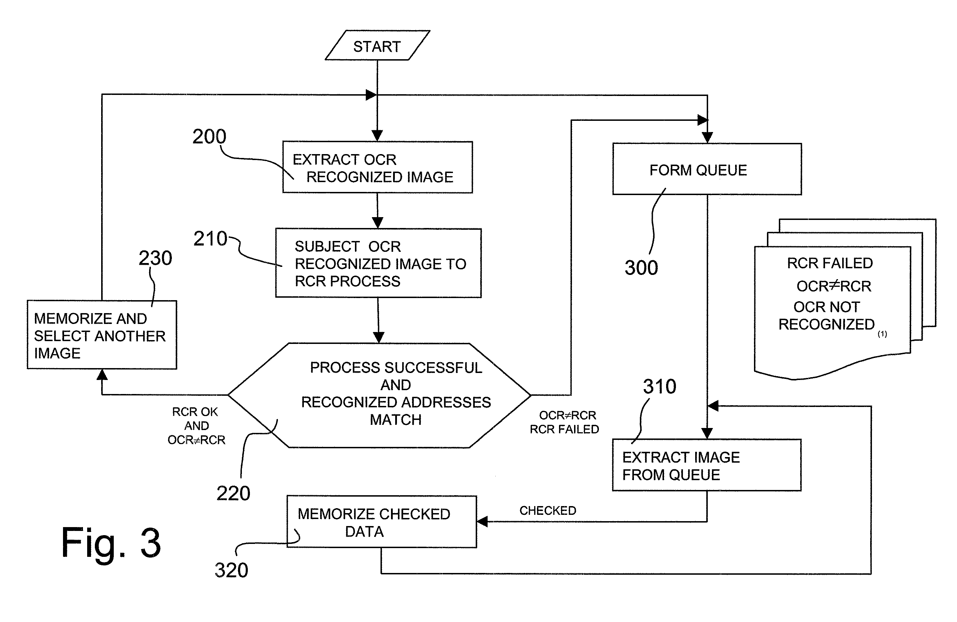

Standby unit 8 performs the operations shown in the Figure 3 flow chart, during which, in the example shown, the mail items are located in the standby unit 8 shown in Figure 1.

More specifically, the operations comprise a first block 200, which extracts an image successfully processed by the first process (in block 110), i.e. an image whose mailing address has been recognized and for which relative data **DATA**_{**OCR**} is available.

Block 200 is followed by a block 210, which subjects the current image to the second, i.e. **RCR**, recognition process.

Block 210 is followed by a block 220, which determines success of the **RCR** process and whether the address recognized matches the one recognized in the same image by the **OCR** process (block 110).

In the event of a positive response (**RCR** process successful, and matching addresses recognized by both different processes), block 220 is followed by a block 230, which memorizes data **DATA**_{**RCR**}**,** selects another image, and then goes back to block 200 to examine the next image, until all the available images have been examined.

In the event of a negative response, block 220 is followed by a block 300 (queuing block), which inserts the current image (for which the **RCR** process and the preceding **OCR** process in Figure 2 give different addresses, or for which the Figure 3 **RCR** process has failed) in a queue to which all the images not recognized by the **OCR** process in Figure 2 (NO output of block 120) are sent.

The queue therefore comprises:
- images rejected by block 120 operating as shown in the Figure 2 flow chart, i.e. the images rejected by the first **OCR** process on the images, and which were therefore coded by the **RCR** process (block 140) or video-coded (block 160);
- images not recognized by the **RCR** process in block 210 (Figure 3); and
- images whose addresses recognized in block 210 do not match those in block 110.

Block 300 is followed by a block 310, which extracts images from the queue for operator video-terminal checking.

Images are extracted in such a way as to form homogeneous queues, i.e. containing one city place-name (e.g. a street) and arranged by alphanumerically arrangeable elements, e.g. building numbers.

The images are displayed on the video-terminal (not shown) so that the addresses can be seen and either accepted or modified by the operator. It should be pointed out that the system provides for displaying the unmatched addresses (e.g. those coded differently by blocks 120 and 210), which are conveniently displayed together with the image of the relative mail item.

The operator may confirm the proposed address, select one of the proposed addresses (in the event of unmatched addresses as described above), alter the proposed address completely, or retrieve the image of a mail item whose address has been altered manually, e.g. to check the proposed address has been altered correctly.

In other words, the operator may:
- complete the available data by adding, deleting, or altering the stored addresses; and
- select the available data (e.g. in the event the **OCR** and **RCR** process results fail to match).

Upon completion of the operations in block 310, the operator enters an end-of-check command, and block 310 goes on to a block 320, which stores the addresses **DATA**_{**CHK**} checked by the operator in block 310 and then goes back to block 310 until all the images have been checked.

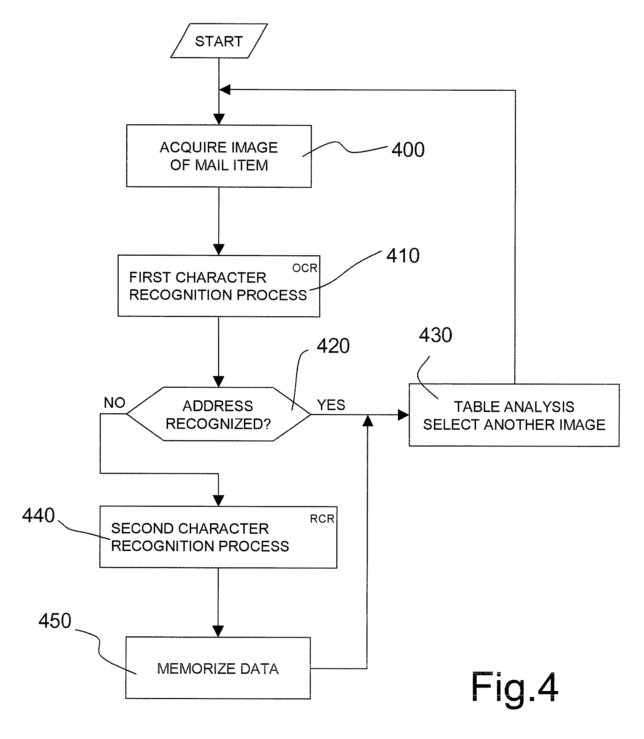

Second unit 9 performs the operations shown in the Figure 4 flow chart.

More specifically, these comprise a first block 400, which acquires (in known manner) another image of a mail item 7 fed to unit 9, acquires the identification code/s previously applied to the mail item, and is followed by a block 410, in which the acquired image is subjected to the **OCR** (Optical Character Recognition) process.

Block 410 therefore repeats the process already performed by block 110.

Block 410 is followed by a block 420, which determines success of the process in block 410, i.e. whether the address has been recognized automatically from the mail item image.

In the event of a positive response (address recognized - first process successful), block 420 is followed by a block 430, which performs a global statistical mail item acceptance analysis by means of tables, selects another image, if there is one, and then goes back to block 400.

If the address on the mail item is recognized, a set of recognized data **DATA**_{**OCR-2**} is generated, is stored in a memory of first unit 9, and is associated with mail item 7 using the existing identification code.

In the event of a negative response (mail item address not recognized), block 420 is followed by a block 440, which subjects the current image to an **RCR** (Reject Character Recognition) process.

Block 440 is followed by a block 450, which stores the previously acquired data **DATA**_{**RCR-2**}**.**

Block 450 then goes back to block 430.

In other words, the second unit repeats the same automatic **OCR** and **RCR** operations performed by first unit 3, but with no video-coding operations.

Like those performed by the first unit, the results of the operations performed by the second unit are stored to permit real-time checking by which to sort and statistically control the stored acquired data.

The object of the method according to the present invention, in fact, is to minimize error. For which purpose, when statistical analysis reveals potentially conflicting situations (e.g. non-matching recognized addresses or identification bar codes which do not conform with the recognition result), the mail items are rejected or sent for checking to a further video-coding station (not shown).

In addition, the image of a mail item for which a possible double extraction has been determined (in known manner) may be forwarded for operator checking (video-coding). In which case, when a potential double extraction is determined, the mechanical line forwards the mail item to a video-coding recognition system, by which an operator determines the actual nature of the mail item image in question.

The real-time check is performed using the tables in block 430.

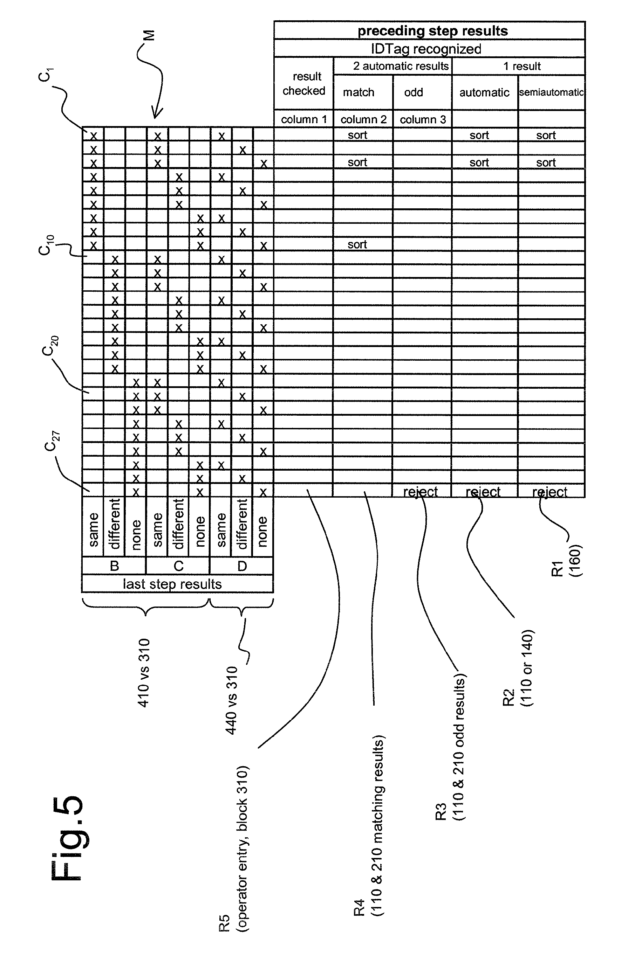

The Figure 5 table shows an example of one possible check.

More specifically:
- row **R1** is selected in the event of only one semiautomatic address recognition (i.e. by video-coding, block 160 - Figure 2);
- row **R2** is selected in the event of only one automatic address recognition (i.e. by the **OCR** or **RCR** process in block 110 or 140);
- row **R3** is selected in the event of two automatic address recognitions by blocks 110 and 210 giving non-matching results; this situation may also be caused, not by the recognition system, but by a double extraction; in which case, even if the recognition system is operating correctly, overlapping of the mail items would result in mismatching;
- row **R4** is selected in the event of two automatic address recognitions by blocks 110 and 210 giving matching results; and
- row **R5** is selected in the event of operator-entered address data in block 310.

Columns C1-C27 in the table are selected on the basis of a matrix M, which receives as input data:
- the comparison between the result of the **OCR** process in block 410 and the operator-entered result in block 310; or
- the comparison between the result of the **RCR** process in block 440 and the operator-entered result in block 310.

On the basis of the data associated with each mail item image, a row R1-R5 and a column C1-C27 are selected, and the intersection of the row and column indicates a box indicating the operation (sort/reject) to be performed on the mail item.

## Claims

1. A mail recognition method comprising the steps of:
- acquiring images (100) of mail items; and
- subjecting said images to a first character recognition process (110) to recognize (120) addresses;
**characterized by** comprising the step of subjecting (200, 210) the images successfully processed by said first character recognition process (120, YES) to a second character recognition process (210), different from the first, to recognize an address; and
- checking (220) to determine whether the results of the different character recognition processes (110, 210) performed on the same image match.

2. A method as claimed in Claim 1, wherein the images unsuccessfully processed by said first character recognition process (120, NO) are subjected to said second character recognition process (140) to generate second sets of data **(DATA**_{**RCR**}**)** and recognize (150) an address.

3. A method as claimed in Claim 1 or 2, wherein, in the event said checking step (220) is negative for a current image, the method comprises the steps of:
- forwarding said image to a store, to which are also forwarded the images whose addresses have failed to be recognized (120, NO) by said first character recognition process (210); and
- extracting (310) the images from said store and subjecting them to an operator check (310).

4. A method as claimed in Claim 3, wherein said extracting step is performed in such a manner as to form homogeneous queues, containing at least one place-name and arranged by alphanumerically arrangeable elements, e.g. building numbers.

5. A method as claimed in Claim 3, wherein said operator check comprises the steps of:
- displaying address data;
- completing the available data by operator command to add, delete or alter addresses; and
- selecting for acceptance (320) any modified data.

6. A method as claimed in Claim 2, and comprising the step of:
- subjecting the images, whose addresses have failed to be recognized (150, NO) by said second character recognition process, to an operator-controlled third character recognition process (160).

7. A method as claimed in Claim 2, and comprising the steps of:
- repeating (410) the first character recognition process on the images already subjected to the first character recognition process (110) to generate storable data **(DATA**_{**OCR-2**}**)** and recognize addresses (420);
- subjecting the images, whose address has failed to be recognized by repetition of said first character recognition process (420, NO), to repetition of said second character recognition process (440) to generate storable data **(DATA**_{**RCR-2**}**)** and recognize addresses.

8. A method as claimed in Claim 7, and comprising the step of using the data derived from at least said first character recognition process, said second character recognition process, and repetition of the first and second character recognition process to perform a global statistical acceptance analysis and obtain an indication as to whether the mail items are to be sorted or rejected.

9. A method as claimed in Claim 8, wherein said global statistical acceptance analysis comprises determining an error condition (430) corresponding to a double extraction, in which two at least overlapping mail items are processed.

10. A method as claimed in Claim 8, wherein said global statistical acceptance analysis is based on at least some of the data acquired by:
- said first character recognition process (110);
- said second character recognition process (140);
- the second character recognition process (210) on images processed successfully by the first character recognition process (110);
- an operator-controlled character recognition process (160);
- operator-entered data involving addition, deletion or alteration of the addresses;
- said repetition of the first character recognition process (410);
- said repetition of the second character recognition process (440).

11. A method as claimed in Claim 1, and comprising the steps of:
determining a possible double extraction, in which two at least overlapping mail items are processed; and
performing an operator check, e.g. by video-coding, of mail items for which a double extraction has been determined.

12. A method as claimed in Claim 1, wherein said first character recognition process (110) is an **OCR** (Optical Character Recognition) process.

13. A method as claimed in Claim 1, wherein said second character recognition process (140) is an RCR (Reject Character Recognition) process.

14. A method as claimed in Claim 6, wherein said third character recognition process (160) is a video-coding process.
